# EUROPEAN PATENT APPLICATION

(11) **EP 2 572 908 A1**
(43) Date of publication of application: **27.03.2013**
(21) Application number: 11783539.7
(22) Date of filing: 17.05.2011
(51) Int. Cl.: B60G 7/00, B60G 3/14, B60G 3/20, B60G 3/28, B60G 9/04, B60K 7/00, B62D 7/18, H02K 7/116

(54) **IN-WHEEL MOTOR DRIVING DEVICE**

(30) Priority: 17.05.2010 JP 2010112977
(71) Applicant: NTN Corporation, Osaka-shi, Osaka 550-0003 (JP)
(72) Inventor: ISHIKAWA Aiko, Iwata-shi Shizuoka 438-0037 (JP); SUZUKI Minoru, Iwata-shi Shizuoka 438-0037 (JP); YAMAMOTO Tetsuya, Iwata-shi Shizuoka 438-0037 (JP); YAMAGATA Akira, Iwata-shi Shizuoka 438-0037 (JP)
(74) Representative: Grünecker, Kinkeldey, Stockmair & Schwanhäusser
(86) International application number: PCT/JP2011/061294
(87) International publication number: WO 2011/145605

(57) **Abstract**

An object of the present invention is to provide an in-wheel motor driving device which includes a highly adaptable suspension mounting portion, is light weighted, and has reduced drag friction at the time of steering operation.

An in-wheel motor driving device comprises : a motor section A which rotates a motor-side rotation member; a speed reducer section B which reduces and transmits rotation of the motor-side rotation member to a wheel-side rotation member; and a wheel hub connected and fixed to the wheel-side rotation members. The above three elements are disposed in series from an inboard side to an outboard side of a vehicle, and suspension mounting brackets 60 are fixed onto an outer surface of the speed reducer section's housing. Arms of a suspension 12b are attached via the suspension mounting brackets 60.

## Description

### TECHNICAL FIELD

The present invention relates to in-wheel motor driving devices incorporating electric motors therein as a driving mechanism for a wheel, and in particular, to suspension mounting structures of these devices.

### BACKGROUND ART

A conventional in-wheel motor driving device 101 is disclosed in JP-A-2009-219271 (Patent Literature 1) for example.

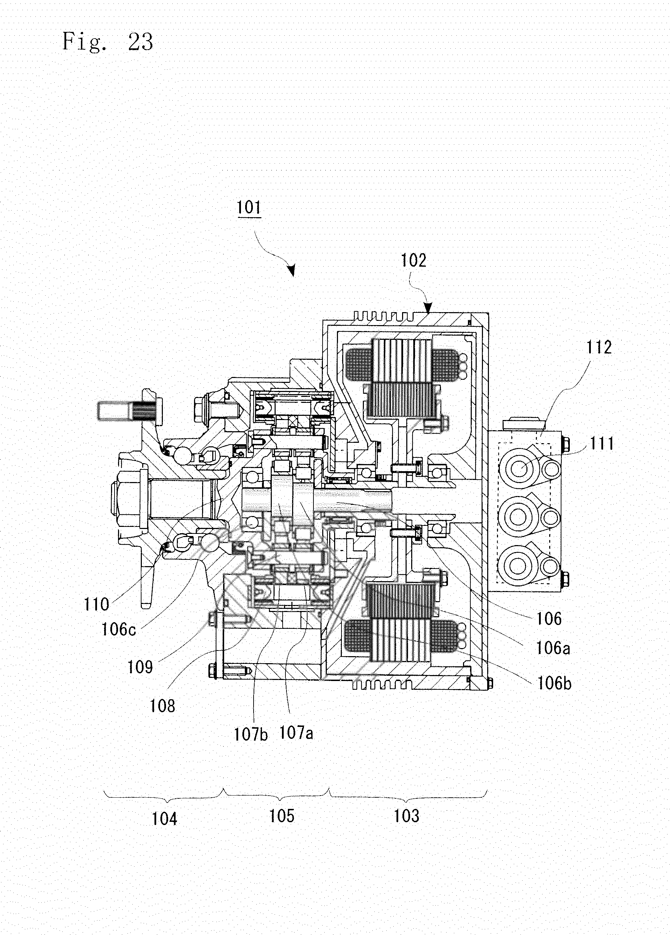

As shown in Fig. 23, the in-wheel motor driving device 101 includes a housing 102 which is attached to a vehicle body; a motor section 103 which is placed therein and generates a driving force; a wheel hub bearing section 104 which is connected to a wheel; and a speed reducer section 105 which reduces rotation speed of the motor section 103 and transmits the rotation to the wheel hub bearing section 104. All of these are disposed in series.

When mounting the in-wheel motor driving device 101 configured as the above to a vehicle body, generally one of two suspension mechanisms is employed.

One of them is a method as disclosed in JP-A-H05-116545 (Patent Literature 2) for example; namely, the device is installed to the vehicle body via a knuckle (hub carrier) which fits around a driving unit's outer circumference and has a suspension arm fitting like those used in conventional engine-driven vehicles.

The other is a method disclosed in Japanese Patent No. 3440082 (Patent Literature 3), namely, a method in which the suspension arm is fixed directly to a housing of a motor portion. The driving unit in this case includes the motor portion; a wheel hub bearing portion connected to a wheel; a speed reducer portion which slows the rotation of motor portion and transmits the rotation to the wheel hub bearing portion; and a mechanical brake. With this, the suspension arm mounting portion to the vehicle body is made as a separate attachment installable to a housing of the motor portion so that the driving unit has an improved adaptability that it is installable to any vehicle regardless of the shape or characteristics of the motor portion.

### CITATION LIST

### Patent Literature

[Patent Literature 1] JP-A-2009-219271
[Patent Literature 2] JP-A-H05-116545
[Patent Literature 3] Japanese Patent No. 3440082

### SUMMARY OF INVENTION

### Technical Problem

Of these mounting methods described above, the former has a problem that it is difficult to incorporate the suspension mounting portion within a limited space inside the wheel since the motor portion's outer diameter is much bigger than that of the wheel shaft of engine-driven vehicles and the knuckle has to be as big accordingly. Therefore, the knuckle has to be shaped to stay outside of the wheel, or must be disposed at a more laterally inboard position with respect to the vehicle width than the driving unit. These problems of larger knuckle size and restriction on the place where the suspension can be disposed lead to another problem of increased unsprung weight. Further, since the king pin' s axis must be offset to a laterally inboard direction of the vehicle width with respect to the tire's contact area with the road surface, the device will create a drag friction during steering operation.

In the latter method where the suspension arm is fixed directly to the motor portion housing, the king pin's axis and the tire's contact area with the road surface are undesirably away from each other since the speed reducer section is sandwiched between the motor portion and the wheel (tire) mounting portion. This increases drag friction at the time of steering operation as well as the moment load applied to the motor portion by the tire which is vibrating in up-down and fore-aft directions. In order to deal with this, the mounting portion has to be increased in its thickness to ensure required strength. These have made it difficult to reduce the weight of the device.

It is therefore an object of the present invention to provide an in-wheel motor driving device which includes a highly adaptable suspension mounting portion, is light weighted, and has reduced drag friction at the time of steering operation.

### Solution to Problem

In order to achieve the above-mentioned object, the present invention provides an in-wheel motor driving device including: a motor section which rotates a motor-side rotation member; a speed reducer section which reduces and transmits rotation of the motor-side rotation member to a wheel-side rotation member; and a wheel hub connected and fixed to the wheel-side rotation member. The above three elements are disposed in series from an inboard side to an outboard side of a vehicle. With this arrangement, the speed reducer section includes suspension mounting brackets fixed onto an outer surface of its housing for connection of an arm of a suspension mechanism.

The suspension mounting brackets may have brake caliper mounting portions.

Also, one of the suspension mounting brackets may have a knuckle-arm shape for connection with a steering tie rod.

It is preferable that the suspension mounting bracket has a plurality of surfaces contacting an outer surface of the housing of the speed reducer section, so that an input load will not be born only by fixing bolts which fix the suspension mounting bracket but also born by the suspension mounting bracket.

The wheel hub may be provided by a hub bearing which incorporates a load sensor.

The speed reducer section may be provided by a planetary-gear reduction gear system or a cycloid reduction gear system.

The suspension mechanismmay be double wishbone type, strut type, torsion beam type, trailing arm type, or other types.

The housing of the motor section and the housing of the speed reducer section may be made of a non-ferrous material whereas the suspension mounting bracket may be made of a steel material, for overall weight reduction.

### Advantageous Effects of Invention

As described above, according to the in-wheel motor driving device offered by the present invention, arms of the suspension mechanism are fixed onto an outer surface of a housing of the speed reducer section via suspension mounting brackets.

Therefore, it is now possible to dispose the suspension arm pivot (king pin axis) closely to the tire' s contact surface with the road, and hence it is now possible to reduce drag friction during steering operation and the moment load from the tire. Since the moment load is now reduced, it is now possible to reduce the weight and size of the driving unit.

Also, by making the suspension mounting bracket as a separate part, the present invention makes it possible to select optimum materials for different members such as strength members, housing members, etc. Not only the materials but also the shape of the members can be optimized with increased freedom.

For example, it is now possible to use a light material, e.g., an aluminum alloy for large-volume components such as the housing of the motor portion and the housing of the speed reducer section while using a high strength steel material for the bracket to which the suspension is connected.

Also, by changing the shape of the bracket, it is now possible to connect brake calipers and/or a tie rod of a steering section. Because of this arrangement, customization can be made easily for a front wheel or a rear wheel, or for types and use of the vehicle, only by changing the shape of the bracket. The present invention provides a highly versatile driving unit, making it possible to use the driving unit as a common part.

Also, by including a detachable bracket, the present invention makes it possible to increase operability in such operations as assembling a suspension to the unit.

Further, the present invention also makes it possible, by using specifically designed bracket, to make the bracket itself receive an input load from the suspension (tire). The arrangement makes it possible to compensate for the strength of the suspension mounting portion.

### BRIEF DESCRIPTION OF DRAWINGS

Fig. 1 is a schematic sectional view of an in-wheel motor driving device according to a first embodiment of the present invention.
Fig. 2 is an enlarged view of a motor section in Fig. 1.
Fig. 3 is an enlarged view of a speed reducer section in Fig. 1.
Fig. 4 is an enlarged view of a wheel hub bearing section in Fig. 1.
Fig. 5 is a sectional view taken in line V-V in Fig. 1.
Fig. 6 is an enlarged view showing a surrounds of an eccentric sections in Fig. 1.
Fig. 7 is a view when a rotary pump in Fig. 1 is viewed in an axial direction.
Fig. 8 is a schematic plan view of an electric vehicle which includes in-wheel motor driving devices in Fig. 1.
Fig. 9 is a schematic rear view of the electric vehicle in Fig. 8.
Fig. 10 is a front view of a housing of a speed reducer section as viewed from the wheel hub bearing section.
Fig. 11 is a perspective view of the housing of the speed reducer section as viewed from the wheel hub bearing section.
Fig. 12 is a perspective view of the housing of the speed reducer section as viewed from the motor section.
Fig. 13 is a perspective view, showing an example of a suspension mounting bracket.
Fig. 14 is a perspective view of the suspension mounting bracket in Fig. 13 as mounted to a housing of the speed reducer section and viewed from the motor section.
Fig. 15 is a front view of the suspension mounting bracket in Fig. 13 as mounted to the housing of the speed reducer section and viewed from the wheel hub bearing section.
Fig. 16 is a perspective view of the suspension mounting bracket in Fig. 13 as mounted to the housing of the speed reducer section, with a suspension mounted thereto.
Fig. 17 is a perspective view, showing another example of the suspension mounting bracket.
Fig. 18 is a perspective view, showing another example of the suspension mounting bracket.
Fig. 19 is a perspective view of the suspension mounting bracket in Fig. 18 as mounted to a housing of the speed reducer section and viewed from the motor section.
Fig. 20 is a perspective view of a suspension mounting bracket as another example, as mounted to a housing of the speed reducer section and viewed from the motor section.
Fig. 21 is a perspective view of a suspension mounting bracket as another example, as mounted to a housing of the speed reducer section and viewed from the motor section.
Fig. 22 is a side view, showing an embodiment of a front wheel driving unit.
Fig. 23 is a schematic sectional view of a conventional in-wheel motor driving device.

### DESCRIPTION OF EMBODIMENTS

Hereinafter, embodiments of the present invention will be described based on the attached drawings.

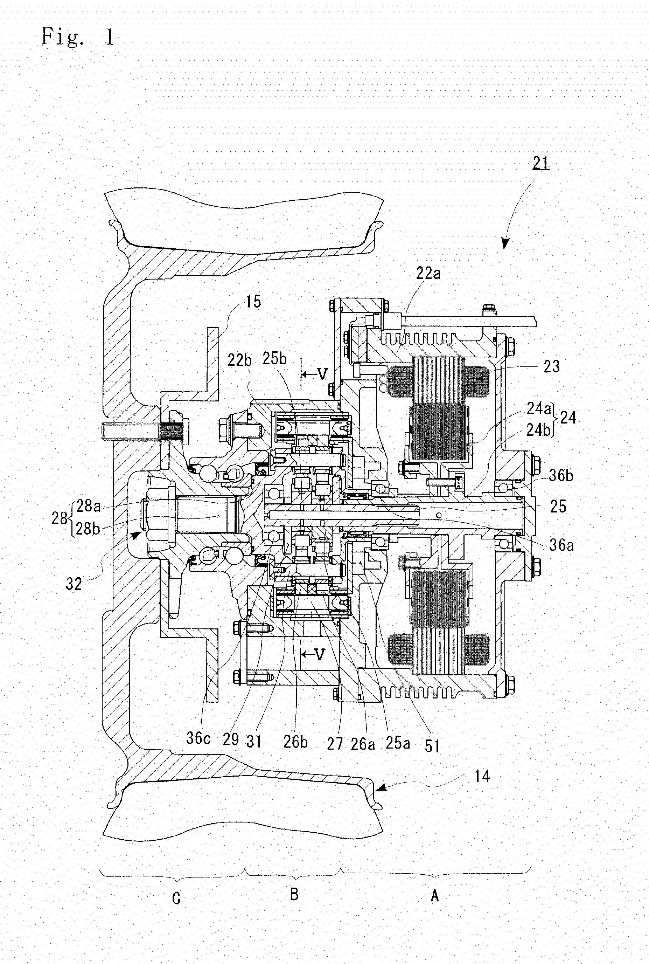

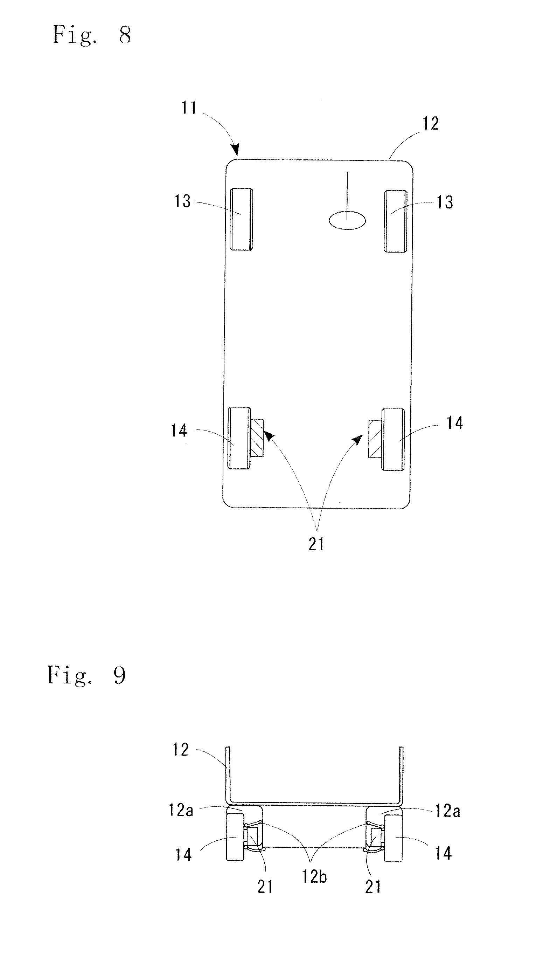

First, as shown in Fig. 1, an in-wheel motor driving device 21 includes a motor section A which generates a driving force; a speed reducer section B which reduces rotating speed of the motor section A and outputs the rotating force; and a wheel hub bearing section C which transmits the output from the speed reducer section B to a driving wheel 14. The device is installed inside a wheel house 12a of a chassis 12 as shown in Fig. 9.

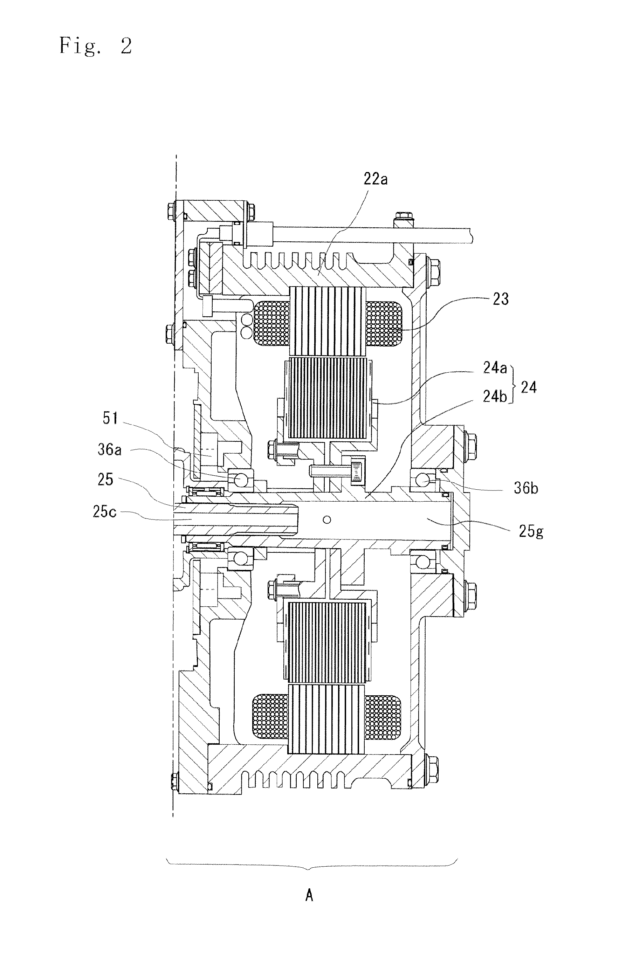

As shown in Fig. 2, the motor section A is provided by a radial-gap motor which includes a stator 23 fixed to a housing 22a; a rotor 24 disposed inside the stator 23 to face thereto with a radial gap in between; and a motor-side rotation member 25 disposed inside the rotor 24, being fixed thereto for integral rotation with the rotor 24. The rotor 24 includes a flange-shaped rotor section 24a and a cylindrical hollow section 24b, and is supported by roller bearings 36a, 36b rotatably with respect to the housing 22a.

The motor-side rotation member 25, which transmits the driving force from the motor section A to the speed reducer section B, is disposed across the motor section A and the speed reducer section B, and includes eccentric sections 25a, 25b inside the speed reducer section B. The motor-side rotation member 25 has one end fitted into the rotor 24, and is supported by a roller bearing 36c inside the speed reducer section B. The two eccentric sections 25a, 25b are disposed at a 180-degree phase difference so that their centrifugal forces due to their eccentric movement are cancelled by each other.

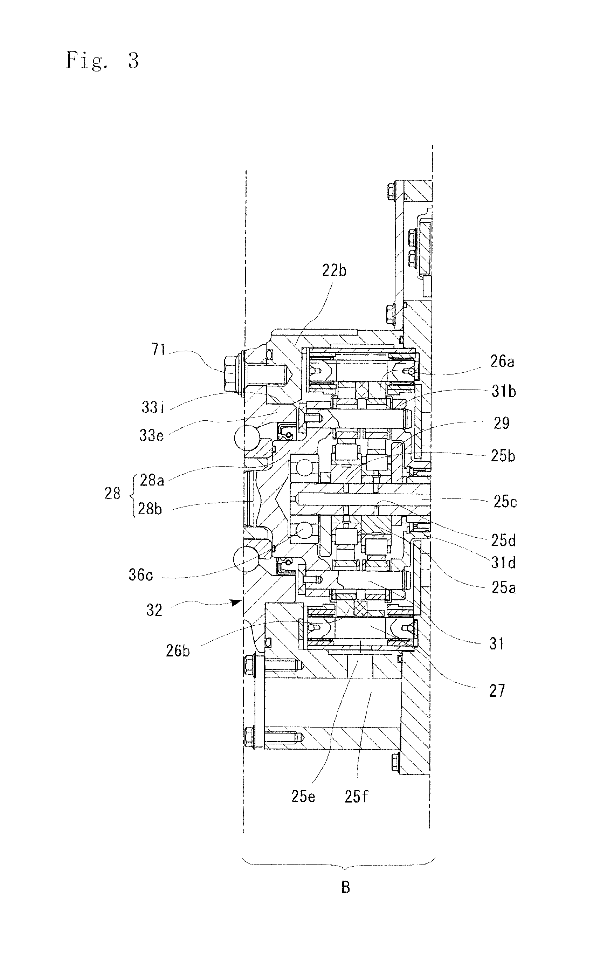

As shown in Fig. 3, the speed reducer section B includes cycloid discs 26a, 26b which serve as revolving members and are rotatably held by the eccentric sections 25a, 25b; a plurality of outer pins 27 which are held at fixed locations on the housing 22b and serving as outer circumferential engager for engagement with the outer circumferential portion of the cycloid discs 26a, 26b; a motion conversion mechanism which transmits rotational movement of the cycloid discs 26a, 26b to a wheel-side rotation member 28; and counterweights 29 disposed adjacently to the eccentric sections 25a, 25b. . The speed reducer section B includes a speed reducer section lubrication mechanism which supplies lubrication oil to the speed reducer section B.

The wheel-side rotation member 28 includes a flange section 28a and a shaft section 28b. The flange section 28a has its end surface formed with holes at an equidistant interval on a circle centered on a rotational center of the wheel-side rotation member 28, for fixing inner pins 31. The shaft section 28b is fitted into and fixed to a wheel hub 32, and transmits the output from the speed reducer section B to the wheel 14. The flange section 28a of the wheel-side rotation member 28 and the motor-side rotation member 25 are rotatably supported by the roller bearing 36c.

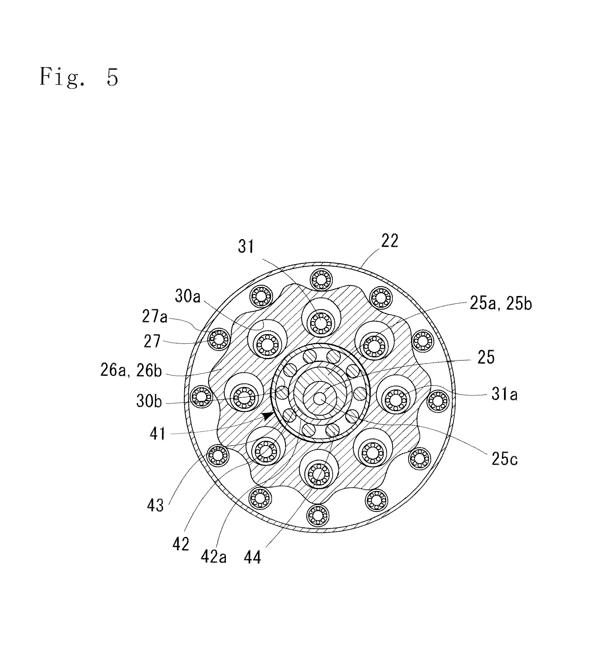

As shown in Fig. 5, the cycloid discs 26a, 26b have a plurality of waveforms composed of trochoid curves such as epitrochoid curve, on their outer circumferences, and a plurality of through-holes 30a penetrating from one end surface to the other end surface. The through-holes 30a are made equidistantly on a circle centering on the rotational center of the cycloid discs 26a, 26b, and accommodate inner pins 31 which will be described later. Also, a through-hole 30b penetrates the center of the cycloid discs 26a, 26b, and fits around the eccentric sections 25a, 25b.

The cycloid discs 26a, 26b are supported by a roller bearing 41 rotatably with respect to the eccentric sections 25a, 25b. As shown in Fig. 5, the roller bearing 41 is provided by a cylindrical roller bearing which includes an inner ring member 42 fitted around outer diameter surfaces of the eccentric sections 25a, 25b and having an inner track surface 42a on its outer diameter surface; an outer track surface 43 formed directly on an inner diameter surface of the through-hole 30b of the cycloid disc 26a; a plurality of cylindrical rollers 44 disposed between the inner track surface 42a and the outer track surface 43; and a retainer (not illustrated) which keeps the distance between the cylindrical rollers 44.

The outer pins 27 are disposed equidistantly on a circular track which centers on the rotational center of the motor-side rotation member 25. As the cycloid discs 26a, 26b make their revolutions, the wavy curves and the outer pins 27 engage with each other and generate rotational movement of the cycloid discs 26a, 26b. In order to reduce frictional resistance with the cycloid discs 26a, 26b, needle roller bearings 27a are provided at places of contact with the outer circumferential surfaces of the cycloid discs 26a, 26b.

The counterweights 29 are disc-like, have a through-hole at a place away from its center for fitting around the motor-side rotation member 25, and are disposed adjacently to the eccentric sections 25a, 25b respectively, at a 180-degree phase difference therefrom in order to cancel unbalanced inertia couple caused by the rotation of the cycloid discs 26a, 26b.

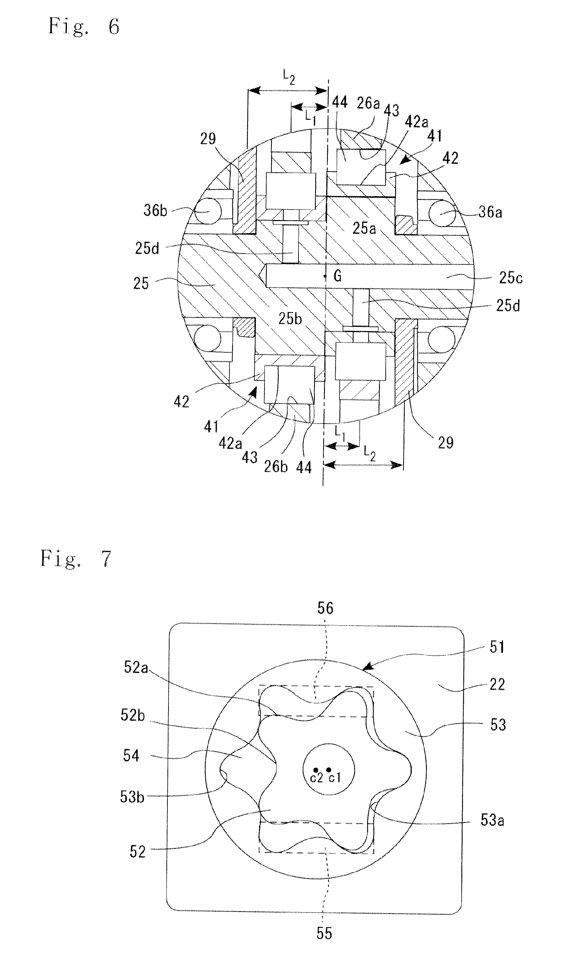

In the above-described arrangement, there is a relationship expressed by the following equation: L1×m1×ε1 =L2×m2×ε2, where, with reference to Fig. 6 which shows a center G of the two cycloid discs 26a, 26b, L1 represents a distance from the center G to the center of the cycloid disc 26a in the right side with respect of the center G in the Fig. 6; m1 represents a sum of masses of the cycloid disc 26a, the roller bearing 41 and the eccentric section 25a; ε1 represents an amount of eccentricity of the center of gravity of the cycloid disc 26a from the axis of rotation; L2 represent the distance from the center G to the counterweight 29; m2 represents the mass of the counterweight 29; and ε2 represents an amount of eccentricity of the center of gravity of the counterweight 29 from the axis of rotation. The same relationship exists between the cycloid disc 26b and the counterweight 29 on the left side with respect to the center G in Fig. 6.

The motion conversion mechanism is constituted by a plurality of inner pins 31 held by the wheel-side rotation member 28 and the through-holes 30a formed in the cycloid discs 26a, 26b. The inner pins 31 is disposed equidistantly on a circular track centering on the rotational center of the wheel-side rotation member 28, and has one of its axial end fixed to the wheel-side rotation member 28. Also, in order to reduce frictional resistance with the cycloid discs 26a, 26b, needle roller bearings 31a are provided to make contact with inner wall surfaces of the through-holes 30a of the cycloid discs 26a, 26b.

On the other hand, the through-holes 30a are formed at locations corresponding to the respective inner pins 31. Each of the through-holes 30a has an inner diameter which is larger, by a predetermined difference, than an outer diameter (a "maximum outer diameter including the needle roller bearing 31a", hereinafter the same will apply) of the inner pins 31.

The speed reducer section lubrication mechanism supplies lubrication oil to the speed reducer section B, and includes a lubrication oil path 25c, lubrication oil inlets 25d, a lubrication oil exit 25e, a lubrication oil reservoir 25f, a rotary pump 51 and a circulation oil path 25g.

The lubrication oil path 25c extends axially inside the motor-side rotation member 25. The lubrication oil inlets 25d extend from the lubrication oil path 25c toward an outer diameter surface of the motor-side rotation member 25. In the present embodiment, the lubrication oil inlet 25d is provided in each of the eccentric sections 25a, 25b.

Also, the lubrication oil exit 25e from which the lubrication oil inside the speed reducer section B is discharged, is provided at least at one location in a bottom portion of the housing 22b which supports the speed reducer section B. The lubrication oil reservoir 25f is provided in the bottom portion of the housing 22b which supports the speed reducer section B.

The lubrication oil in the lubrication oil reservoir 25f is sucked by the rotary pump 51, and circulated forcibly via the circulation oil path 25g and to the lubrication oil path 25c.

As shown in Fig. 7, the rotary pump 51 is a cycloid pump which includes an inner rotor 52 rotated by rotation of the wheel-side rotation member 28; an outer rotor 53 rotated in association with rotation of the inner rotor 52; a pump chamber 54; an suction port 55; and a discharge port 55 communicating with the circulation oil path 25g.

The inner rotor 52 has its outer diameter surface formed with a cycloid teeth pattern. Specifically, tooth tip portions 52a are composed of epicycloid curves while tooth groove portions 52b are composed of hypocycloid curves. The inner rotor 52 rotates integrally with internal pins 31 (wheel-side rotation member 28).

The outer rotor 53 has its inner diameter surface formed with a cycloid teeth pattern. Specifically, tooth tip portions 53a are composed of hypocycloid curves while tooth groove portions 53b are composed of epicycloid curves. The outer rotor 53 is supported rotatably by the housing 22.

The inner rotor 52 rotates on a rotation center c1. On the other hand, the outer rotor 53 rotates on a rotation center c2 which is different from the rotation center c1 for the inner rotor. Also, it should be noted here that when the inner rotor 52 has as many as n teeth, then the outer rotor 53 has (n+1) teeth. In the present embodiment, n=5.

A plurality of pump chambers 54 are provided in a space between the inner rotor 52 and the outer rotor 53. With the above arrangement, as the inner rotor 52 rotates by using the rotation of the wheel-side rotation member 28, the outer rotor 53 is driven to rotate. Since the inner rotor 52 and the outer rotor 53 rotate on the different rotation centers c1, c2 in this process, the volume of each pump chamber 54 changes constantly. Thus, the lubrication oil from the suction mouth 55 is pumped out of the discharge port 56 to the circulation oil path 25g.

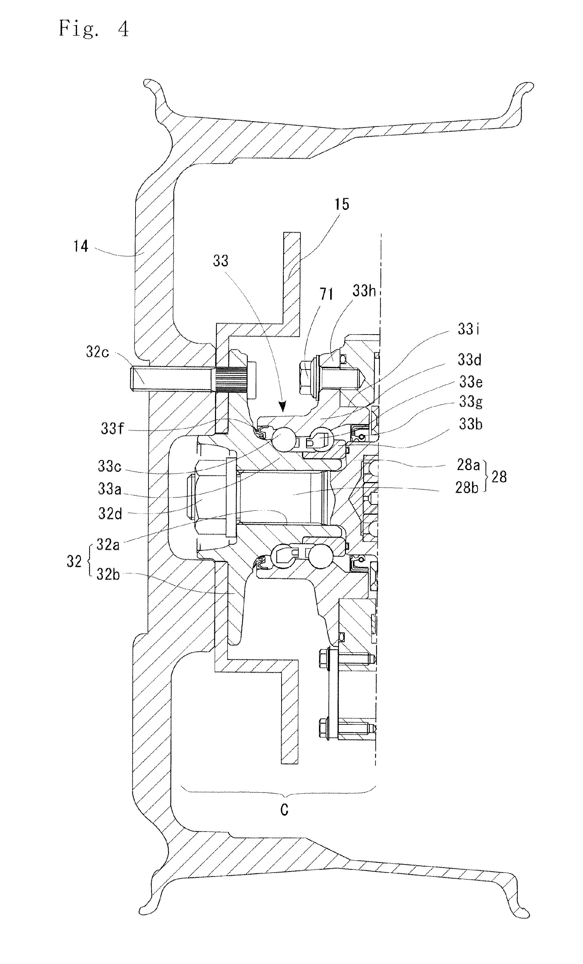

As shown in Fig. 4, the wheel hub bearing section C includes a wheel hub 32 connected and fixed to the wheel-side rotation member 28, and a wheel hub bearing 33 which supports the wheel hub 32 rotatably with respect to the housing 22b of the speed reducer section B. The wheel hub 32 has a cylindrical hollow section 32a and a flange section 32b. A driving wheel 14 is fixed to the flange section 32b with bolts 32c. The shaft section 28b of the wheel-side rotation member 28 has its outer diameter surface formed with a spline and a male thread. The hollow section 32a of the wheel hub 32 has its inner diameter surface formed with a spline hole. The wheel-side rotation member 28 is threaded into the inner diameter surface of the wheel hub 32, and a nut 32d is threaded to fasten the two members with each other. A brake disc 15 is provided between a tire wheel of the driving wheel 14 and the flange section 32b of the wheel hub 32.

The wheel hub bearing 33 is provided by a double-row angular contact ball bearing which includes an inside member 33a constituted by an outer-side track surface which is integrally formed on an outer diameter surface of the hollow section 32a in the wheel hub 32 along a laterally outer side with respect to the vehicle, and an inner ring 33b which is fitted around an outer diameter surface of the hollow section 32a of the wheel hub 32 along a laterally inner side with respect to the vehicle and has an outer surface formed with an inner-side track surface; two rows of balls 33c disposed on the outer-side track surface and the inner-side track surface of the inside member 33a; an outer member 33d having an inner circumferential surface formed with an outer-side track surface and an inner-side track surface opposed to the outer-side track surface and the inner-side track surface in the inside member 33a; a retainer 33e which keeps a distance between mutually adjacent balls 33c; and sealing members 33f, 33g which seal two axial ends of the wheel hub bearing 33.

The outer member 33d of the wheel hub bearing 33 is fixed to the housing 22b of the speed reducer section B with fastening bolts 71.

The outer member 33d of the wheel hub bearing 33 has a flange section 33h of its outer diameter portion, and a cylindrical section 33i on its side facing the speed reducer section B.

As shown in Fig. 8, an electric vehicle 11 equipped with in-wheel motor driving devices according to an embodiment of the present invention includes a chassis 12, front wheels 13 as steering wheels, rear wheels 14 as driving wheels, and in-wheel motor driving devices 21 which transmit driving forces to the left and the right rear wheels 14 respectively. As shown in Fig. 9, the rear wheels 14 are housed inside wheel houses 12a of the chassis 12, and are fixed to a lower portion of the chassis 12 via suspensions 12b.

In the present invention, the suspension 12b has an end which is connected to the housing 22b of the speed reducer section B via a suspension mounting bracket 60.

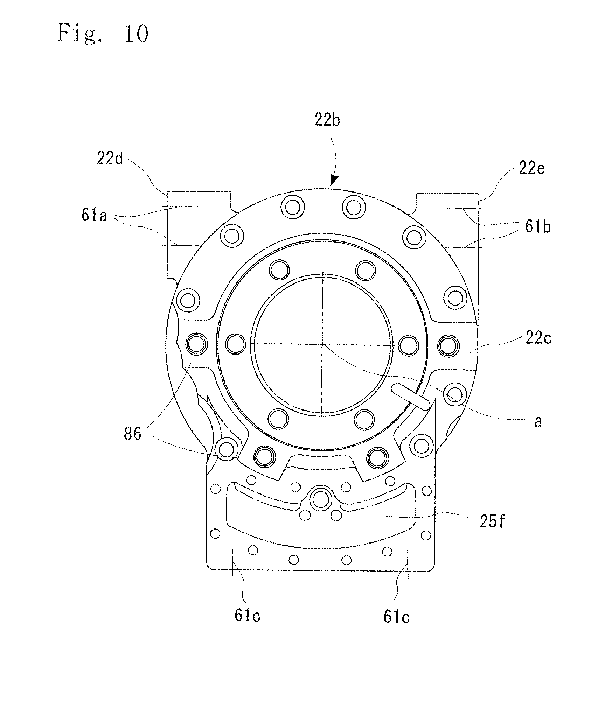

As shown in Fig. 10, the housing 22b of the speed reducer section B has bolt holes 61a, 61b, 61c for fixing the suspension mounting brackets 60. The suspension mounting brackets 60 are bolted onto the housing 22b of the speed reducer section B, and ends of suspensions 81, 82, 83 are connected to the housing 22b of the speed reducer section B via the suspension mounting brackets 60.

As shown in Fig. 10, the housing 22b of the speed reducer section B has a generally cylindrical portion 22c for housing a speed reducer mechanism of the speed reducer section B which has an input and an output shafts concentric with the motor output shaft "a"; and a lubrication oil reservoir 25f which stores lubrication oil. The generally cylindrical portion 22c has flat portions 22d, 22e at upper regions of its two sides. The flat portions 22d, 22e which are provided at the upper region of the housing 22b, and a lower end surface of the lubrication oil reservoir 25f are formed with bolt holes 61a, 61b, 61c for fixing the suspension mounting brackets 60.

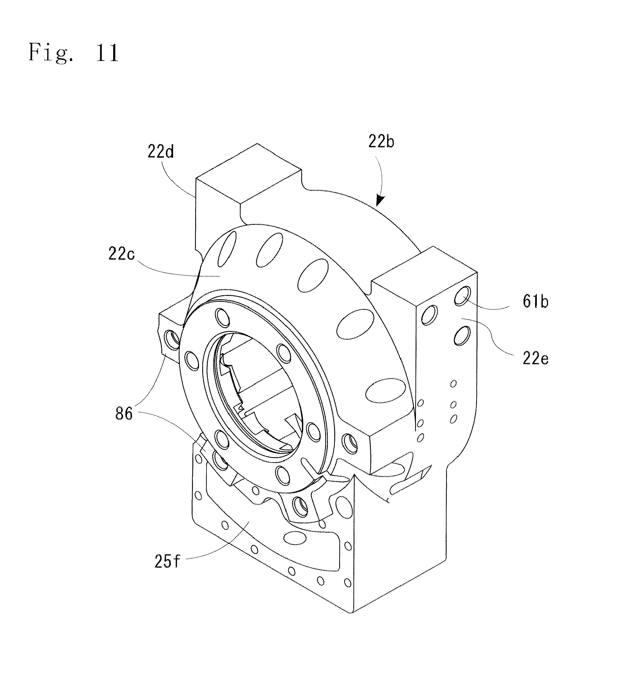

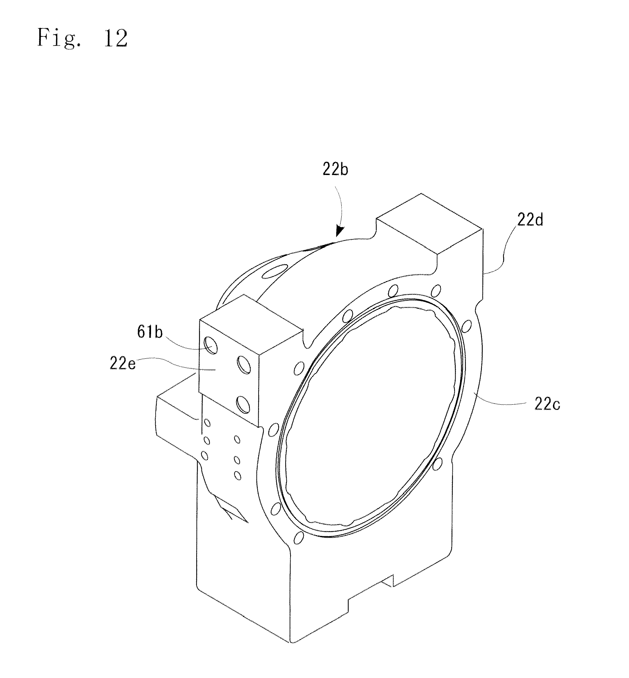

Fig. 11 is a perspective view of the housing 22b of the speed reducer section B as viewed from a side to which the wheel hub bearing section C is to be mounted. Fig. 12 is a perspective view from a mounting-surface side of the motor section A.

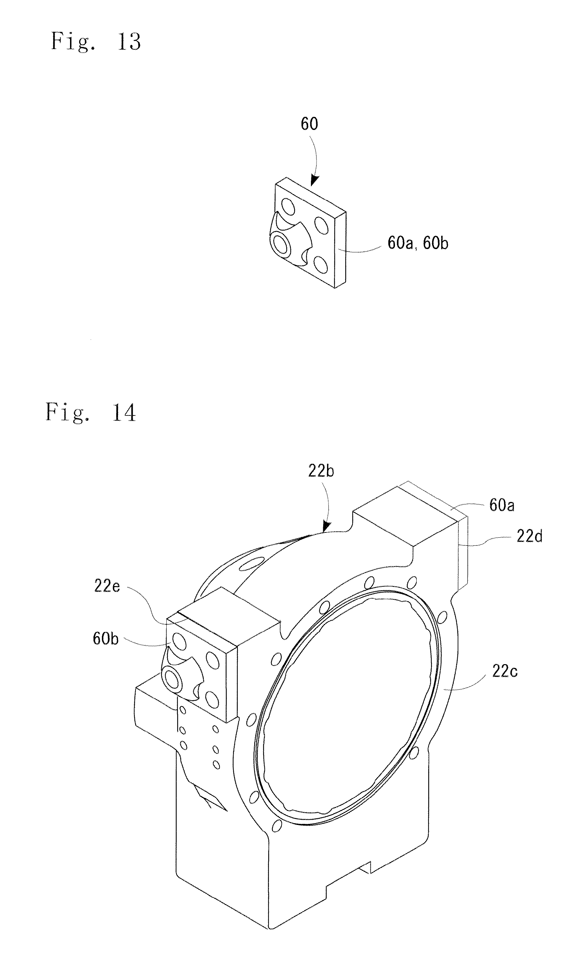

Fig. 13 shows a suspension mounting bracket 60 serving as an upper arm bracket 60a for connecting an upper arm 81 of the suspension 12b, as well as serving as a toe control rod bracket 60b for connecting a toe control rod 82.

Fig. 14 shows a state in which the upper arm bracket 60a and the toe control rod bracket 60b are mounted to the flat portions 22d, 22e provided on the upper region of the housing 22b of the speed reducer section B.

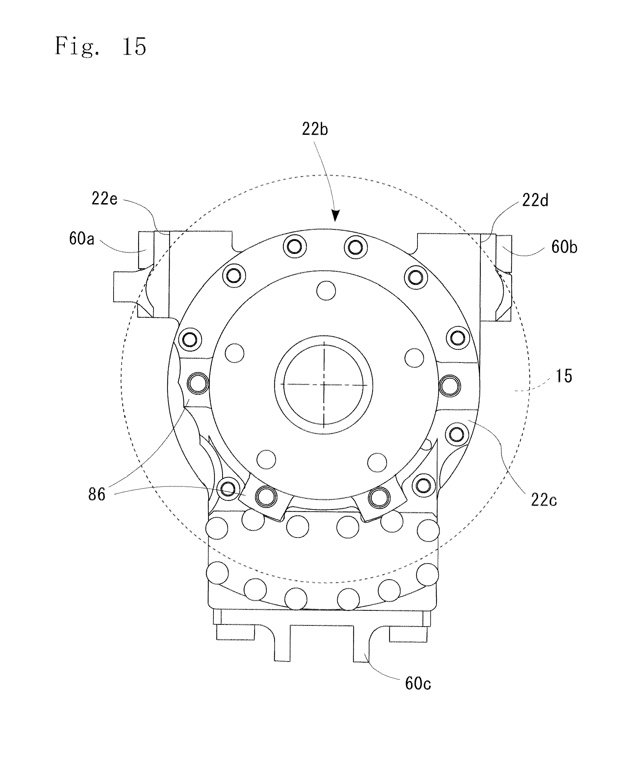

Also, Fig. 15 is a view from a side to which the wheel hub bearing section C is to be mounted. The figure shows a brake disc 15 indicated by broken lines, and a lower arm bracket 60c attached to a lower end surface of the lubrication oil reservoir 25f. A reference symbol 86 indicates a brake calipers mounting portion which is provided on the housing 22b of the speed reducer section B.

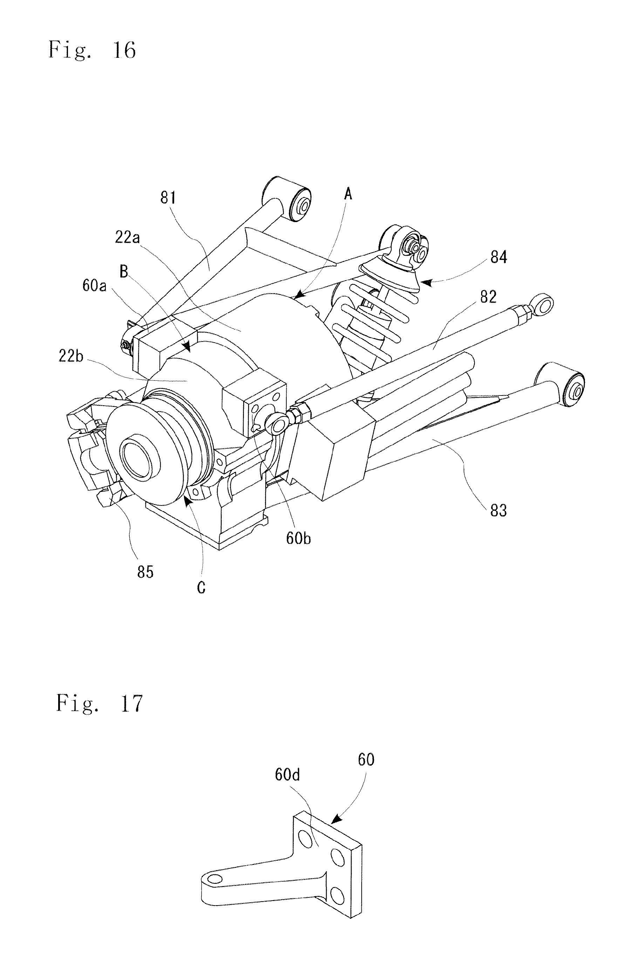

Fig. 16 shows a state where the upper arm 81, which is a component of the suspension 12b, is connected to the upper arm bracket 60a; the toe control rod 82 is connected to the toe control rod bracket 60b; and a lower arm 83 is connected to the lower arm bracket 60c.

The lower arm 83 and the upper arm 81 are spaced from each other, and a shock absorber 84 is disposed in this space to reduce vibration from the road surface. The shock absorber 84 has a lower end which is foxed to the lower arm 83, and an upper end which is fixed to the chassis 12.

The housing 22b of the speed reducer section B has a brake mounting portion 86, to which brake calipers 85 are fixed as shown in Fig. 16.

The brake disc 15 is fixed via the wheel hub bearing section C for integral rotation with the wheel 14.

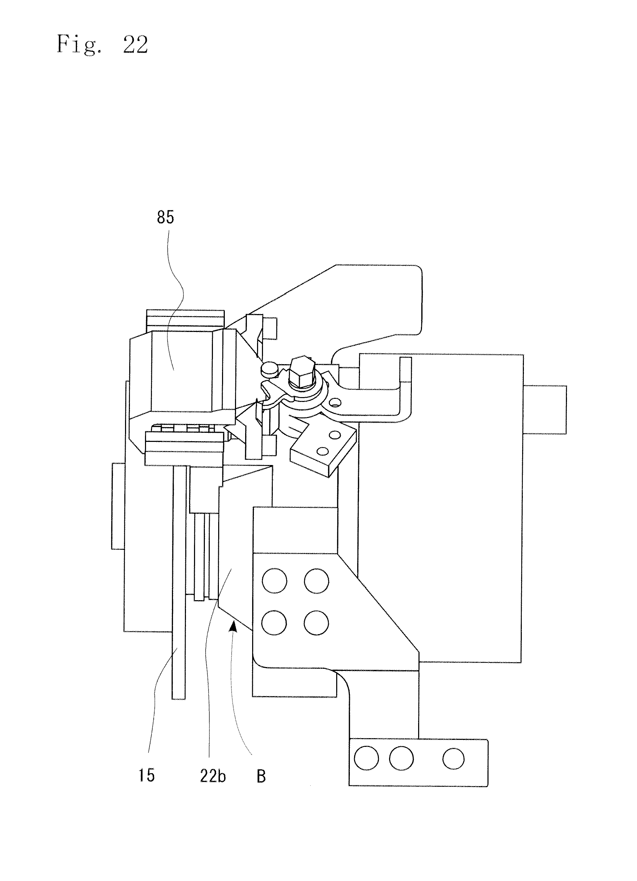

Next, Fig. 17 shows a bracket 60d which has a knuckle-arm shape. This bracket 60d may be mounted to the housing 22b of the speed reducer section B in place of the toe control rod bracket 60b, to constitute a front wheel driving unit. An example of this front wheel driving unit is shown in Fig. 22.

As understood from the above, the driving unit can be used commonly for a front wheel as well as a rear wheel by simply changing the shape of the suspension mounting bracket 60.

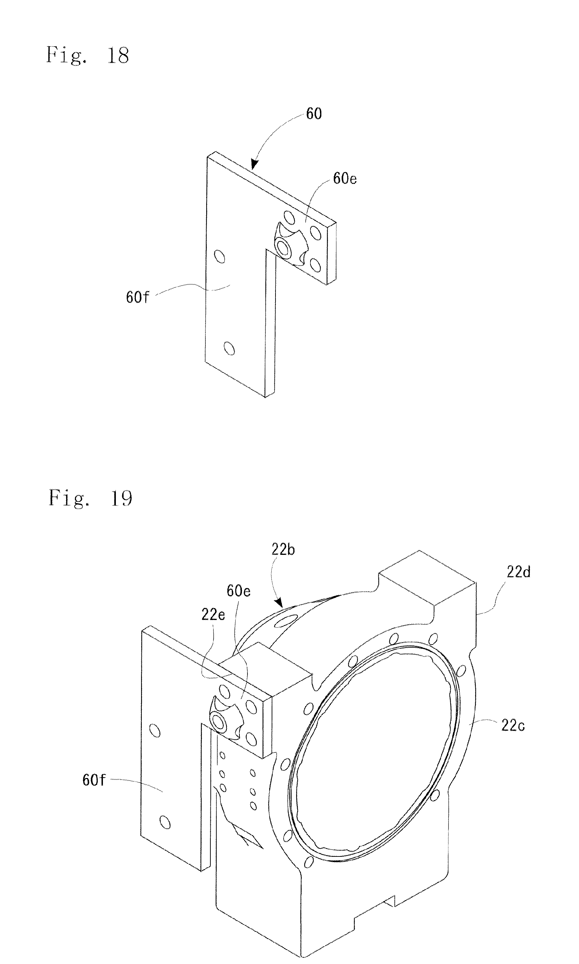

Next, Fig. 18 shows a bracket 60e, which is a suspension mounting bracket 60 including a brake mounting portion 60f. Fig. 19 shows a state in which the bracket 60e is mounted.

The bracket 60e, which includes the brake mounting portion 60f as described, enables a driving unit to be used as a common driving unit by simply changing the bracket 60e according to the shape of the brake.

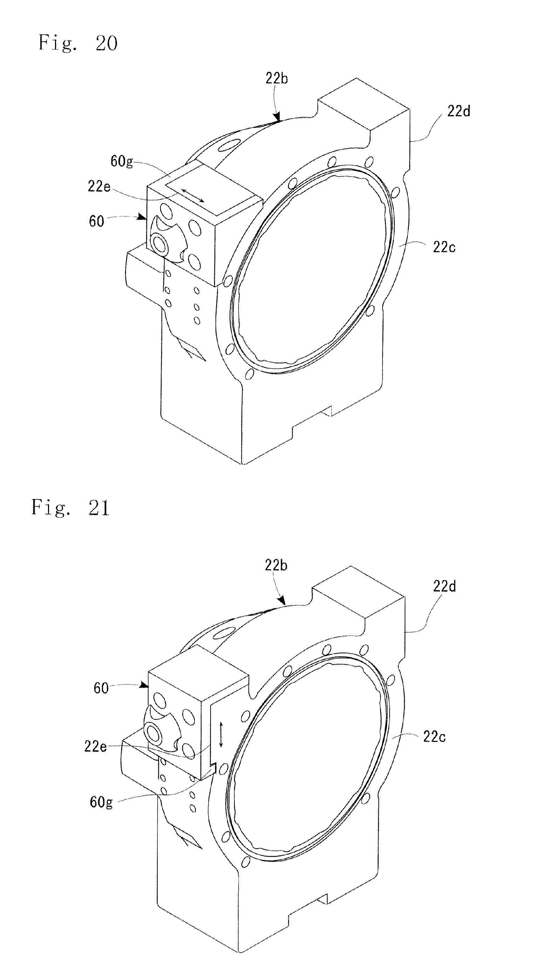

Next, Fig. 20 and Fig. 21 show embodiments in which the suspension mounting bracket 60 has a seat formed with load bearing portions 60g for contact with two surfaces in each of the flat portions 22d, 22e that are made on the housing 22b of the speed reducer section B so that an input load from the tire to the suspension 12b will not be born only by the bolts which fix the suspension mounting bracket 60 onto the housing 22b of the speed reducer section B. Fig. 20 shows an example arrangement where the load bearing portions 60g make contact with a front and a rear surfaces of the seat of the suspension mounting bracket 60 for receiving an axial load whereas Fig. 21 shows an example arrangement where the load bearing portions 60g make contact with an upper and a lower surfaces of the seat of the suspension mounting bracket 60 for receiving a vertical load. Arrows in Fig. 20 and Fig. 21 indicate directions of the load.

As another arrangement, the housing 22b of the speed reducer section B may include cylindrical suspension mounting portions which have the flat portions 22d, 22e, with the suspension mounting brackets 60 formed as bottomed cylinders for being fitted by the flat portions 22d, 22e to receive the load.

Next, there is no specific limitation to materials for the housing 22a of the motor section A, the housing 22b of the speed reducer section B or the suspension mounting bracket 60. The most appropriate materials may be selected according to the use and the shape.

For example, the housing 22a of the motor section A and the housing 22b of the speed reducer section B may be made of a light-weight material such as an aluminum alloy and resin (including fiber-reinforced resins) whereas the suspension mounting bracket 60 may be made of a steel material for weight reduction.

Also, heat treatment and/or surface treatment may be performed for reinforcement and other performance improvement such as bruise resistance, corrosion resistance, etc. Examples of such treatment include chromate treatment and alumite treatment.

In the embodiments described thus far, the suspension mounting brackets 60 are bolted to the housing 22b of the speed reducer section B. However, bolting may be replaced by welding.

There is no specific limitation, either, to the type of the suspension; in other words, the suspension 12b may be double wishbone type, strut type, torsion beam type, trailing arm type, or others.
The wheel hub may be provided by a hub bearing which incorporates a load sensor.

In the embodiment described above, the cycloid discs 26a, 26b are supported by cylindrical roller bearings. However, the present invention is not limited by this. For example, the bearing may be replaced by slide bearings, cylindrical roller bearings, tapered roller bearings, needle roller bearings, self-aligning roller bearings, deep groove ball bearings, angular contact ball bearings, four-point contact ball bearings, or any other types of bearing regardless of whether they are slide bearings or rolling bearings, whether the bearings includes rollers or balls, or whether the bearings are single row type or double row type. The above applies to any other bearings which are disposed elsewhere in the device, so whatsoever types of bearing may be used.

It should be noted, however, that deep groove ball bearings have a higher allowable limit in terms of the number of rotations but have a lower load capacity as compared to cylindrical roller bearings. For this reason, a large deep groove ball bearing will have to be utilized in order to achieve a necessary load capacity. Therefore, cylindrical roller bearings will be more suitable as the roller bearing 41 in view of making the in-wheel motor driving devices 21 more compact.

In the above-described embodiments, the motor section A was provided by a radial gap motor. However, the present invention is not limited to this, and any suitable motor may be employed. For example, an axial gap motor which includes a stator fixed to a housing, and a rotor which is disposed inside the stator to face thereto with an axial gap may be utilized.

Also, in each of the embodiments described above, the speed reducer section B in the in-wheel motor driving device 21 is implemented by a cycloid reduction gear system. However, the present invention is not limited to this, and any speed reducing mechanism may be employed. Examples include planetary gear speed reducing mechanism and parallel axis gear speed reducing mechanism.

Further, the electric vehicle 11 shown in Fig. 8 has the rear wheels 14 serving as driving wheels. However, the present invention is not limited to this, and the front wheels 13 may serve as driving wheels or the vehicle may be a four-wheel drive vehicle. It should be noted here that in the present description, the term "electric vehicle" means any type of vehicle which is driven by electricity. For example, therefore, hybrid cars and similar vehicles should also be included in this category.

Thus far, embodiments of the present invention have been described with reference to the drawings. However, the present invention is not limited to these illustrated embodiments. Any of these embodiments illustrated thus far may be modified or changed in many ways within the scope or within the equivalence of the present invention.

### REFERENCE SIGNS LIST

- A: motor section
- B: speed reducer section
- C: wheel hub bearing section
- 11: electric vehicle
- 12: chassis
- 12a: wheel house
- 12b: suspension
- 13: front wheels
- 14: rear wheels
- 15: disc brake
- 22a: housing of motor section A
- 22b: housing of speed reducer section B
- 22c: generally cylindrical portion
- 22d, 22e: flat portions
- 25f: lubrication oil reservoir
- 60: suspension mounting bracket
- 60a: upper arm bracket
- 60b: toe control rod bracket
- 60c: lower arm bracket
- 81: upper arm
- 82: toe control rod
- 83: lower arm
- 84: shock absorber
- 85: brake calipers
- 24: rotor
- 24a: rotor section
- 24b: hollow section

## Claims

1. An in-wheel motor driving device comprising: a motor section which rotates a motor-side rotation member; a speed reducer section which reduces and transmits rotation of the motor-side rotation member to a wheel-side rotation member; and a wheel hub connected and fixed to the wheel-side rotation member; the above three elements being disposed in series from an inboard side to an outboard side of a vehicle; wherein the speed reducer section includes suspension mounting brackets fixed onto an outer surface of its housing for connection of an arm of a suspension mechanism.

2. The in-wheel motor driving device according to Claim 1, wherein the suspension mounting brackets have brake caliper mounting portions.

3. The in-wheel motor driving device according to Claim 1, wherein one of the suspension mounting brackets has a knuckle-arm shape for connection with a steering tie rod.

4. The in-wheel motor driving device according to one of Claims 1 through 3, wherein the suspension mounting bracket has a plurality of surfaces contacting an outer surface of the housing of the speed reducer section, for the suspension mounting bracket to receive an input load.

5. The in-wheel motor driving device according to one of Claims 1 through 4, wherein the wheel hub is provided by a hub bearing having a load sensor.

6. The in-wheel motor driving device according to one of Claims 1 through 5, wherein the speed reducer section is of a planetary-gear reduction gear system.

7. The in-wheel motor driving device according to one of Claims 1 through 5, wherein the speed reducer section is provided by a cycloid reduction gear system.

8. The in-wheel motor driving device according to one of Claims 1 through 7, wherein the suspension mechanism is of a double wishbone type.

9. The in-wheel motor driving device according to one of Claims 1 through 7, wherein the suspension mechanism is of a strut type.

10. The in-wheel motor driving device according to one of Claims 1 through 7, wherein the suspension mechanism is of a torsion beam type.

11. The in-wheel motor driving device according to one of Claims 1 through 7, wherein the suspension mechanism is of a trailing arm type.

12. The in-wheel motor driving device according to one of Claims 1 through 11, wherein the motor section and the speed reducer section have their housings made of a non-ferrous material whereas the suspension mounting bracket is made of steel.
